# FASCICULE DE BREVET EUROPEEN

(11) **EP 0 739 792 B1**
(45) Date de publication et mention de la délivrance du brevet: **23.09.1998**
(21) Numéro de dépôt: 96400891.6
(22) Date de dépôt: 25.04.1996
(51) Int. Cl.: B60S 1/04, B60R 21/00

(54) **Dispositif d'essuyage pour véhicule automobile comportant une platine de fixation à amorce de rupture, et platine appartenant à un tel dispositif**
Wischvorrichtung für ein Kraftfahrzeug mit einer Halterung mit Sollbruchstelle und Halterung mit einer solchen Vorrichtung
Wiping device for a motor vehicle with a holder plate with breaking piece, and plate with such a device

(30) Priorité: 28.04.1995 FR 9505250
(43) Date de publication de la demande: 30.10.1996
(73) Titulaire: VALEO SYSTEMES D'ESSUYAGE, 78321 La Verrière (FR)
(72) Inventeur: Eustache, Jean-Pierre, 92160 Antony (FR)
(74) Mandataire: Kohn, Philippe

(56) Documents cités:
- EP-A- 0 510 345
- DE-A- 2 855 240
- GB-A- 2 218 622

## Description

L'invention concerne un dispositif d'essuyage pour véhicule automobile.

L'invention concerne plus particulièrement un dispositif d'essuyage pour véhicule automobile comportant au moins une platine de guidage et de fixation d'un arbre d'entraînement en balayage alterné d'un essuie-glace, du type dans lequel la platine comporte un fût dans lequel l'arbre d'entraînement est reçu à rotation, du type dans lequel la platine est fixée sur la caisse du véhicule par une semelle transversale et du type dans lequel la platine est reliée au dispositif d'essuyage par un moignon transversal.

Une telle platine constitue un mécanisme classique de fixation du dispositif d'essuyage sur la caisse du véhicule. (voir par exemple le document GB-A-2 218 622).

On a remarqué qu'en cas d'accident violent, le dispositif d'essuyage, qui est agencé dans le compartiment moteur à proximité de l'habitacle, pouvait pénétrer à l'intérieur de l'habitacle par la baie de pare-brise sous l'effet du choc.

L'intrusion accidentelle d'un élément aussi massif se révèle alors dangereux pour la sécurité des passagers et il est donc apparu nécessaire de mieux prévoir le comportement du dispositif d'essuyage en cas de choc violent.

Dans ce but, l'invention propose un dispositif d'essuyage du type vu précédemment, caractérisé en ce que la platine comporte au moins une zone d'amorce de rupture à section résistante réduite destinée à désolidariser le dispositif d'essuyage de la caisse du véhicule en cas de choc violent.

Selon d'autres caractéristiques de l'invention :
- une zone d'amorce de rupture est agencée sur le moignon transversal sous la forme d'une gorge radiale de manière à désolidariser le dispositif d'essuyage de la platine en cas de choc ; - une zone d'amorce de rupture est agencée sur la semelle de manière à désolidariser le dispositif d'essuyage et la platine de la caisse en cas de choc ;
- la semelle de la platine comporte au moins un trou pour le passage d'une vis de fixation, et en ce que la platine présente autour du trou une section réduite dans laquelle est aménagée au moins une entaille pour former la zone d'amorce de rupture ;
- la platine est réalisée en une seule pièce, notamment par moulage.

L'invention propose également une platine réalisée conformément aux enseignements de l'invention.

D'autres caractéristiques et avantages de l'invention apparaîtront à la lecture de la description détaillée qui suit pour la compréhension de laquelle on se reportera aux dessins annexés dans lesquels :
- La figure 1 est une vue schématique en perspective d'un premier mode de réalisation d'une platine conforme aux enseignements de l'invention ;
- la figure 2 est une représentation schématique en perspective d'un second mode de réalisation de l'invention.

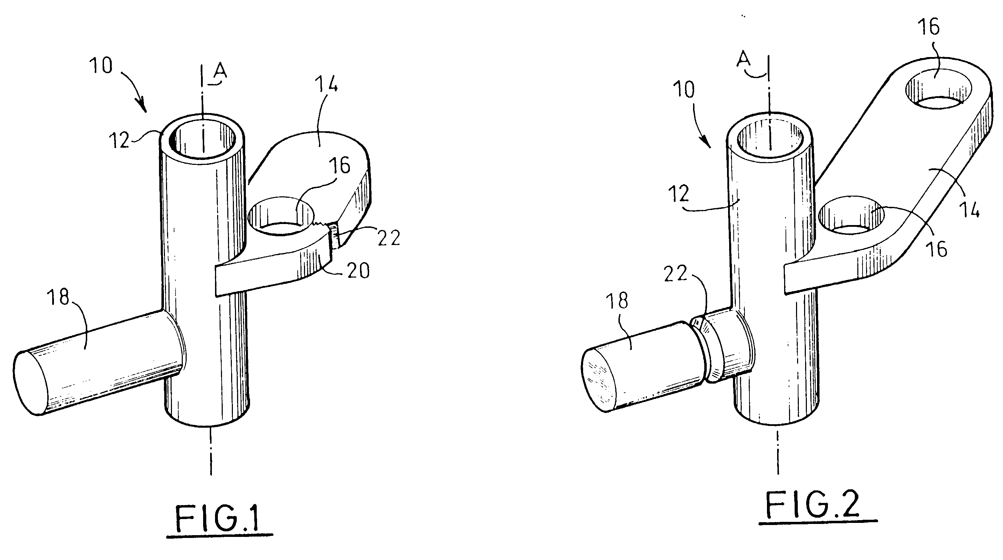

On a représenté sur la figure 1 une platine 10 d'un dispositif d'essuyage (non représenté) pour véhicule automobile.

La platine 10 comporte un fût tubulaire 12 d'axe A qui est prévu pour recevoir à rotation autour de son axe A un arbre d'entraînement (non représenté) d'un essuie-glace.

Pour sa fixation sur la caisse du véhicule (non représentée), la platine 10 comporte une semelle 14 qui s'étend sensiblement transversalement depuis le fût 12.

La semelle 14 comporte un trou de fixation 16 d'axe sensiblement parallèle à l'axe A du fût 12.

La platine 10 comporte également un moignon 18 qui s'étend transversalement depuis le fût 12 et qui sert à la liaison de la platine 10 avec le système d'entraînement (non représenté) du dispositif d'essuyage.

Conformément aux enseignements de l'invention, on a réalisé dans le chant 20 de la semelle 14 une entaille 22 destinée à diminuer la section résistante de la semelle, au niveau du trou de fixation 16 de la platine.

L'entaille 22 est agencée parallèlement à l'axe du trou 16.

Pour plus de sûreté dans le fonctionnement de cette zone de rupture programmée, on pourra prévoir la réalisation d'une deuxième entaille symétrique (non représentée).

Dans tous les cas, on veillera toutefois à ce que la section résistante qui subsiste soit suffisante pour assurer la solidité de la fixation du dispositif d'essuyage dans toutes les conditions normales de montage et d'utilisation.

Seul des efforts exceptionnels, dus par exemple à un choc violent du véhicule, devront être en mesure de rompre la semelle de fixation de la platine 10.

On a représenté sur la figure 2 un second mode de réalisation de l'invention.

Des éléments identiques ou similaires à ceux représentés sur la figure 1 sont désignés par les mêmes références.

Dans ce second mode de réalisation, une entaille 22 réalisée sous la forme d'une gorge radiale a été aménagée sur toute la circonférence du moignon transversal 18 de la platine 10.

Ainsi, en cas de choc violent, le dispositif d'essuyage sera désolidarisé de la platine 10 par rupture du moignon.

La platine 10, l'arbre d'entraînement et l'essuie-glace resteront en place sur la caisse du véhicule étant donné leur faible masse.

L'invention permet ainsi de déterminer avec précision le comportement du dispositif d'essuyage en cas de choc.

D'autres zones de rupture "programmées" pourront être prévues de manière à fractionner le dispositif susceptible de pénétrer à l'intérieur de l'habitacle en cas de choc violent.

De même on peut ainsi créer par ailleurs une direction privilégiée d'éjection du dispositif d'essuyage qui permettra d'éviter que celui-ci ne blesse les passagers du véhicule.

Dans les exemples illustrés sur les figures, la platine 10 est réalisée en une seule pièce moulée, ou mécano-soudée.

Sans sortir du cadre de l'invention, il est possible de prévoir que la platine comporte plusieurs composants assemblés.

Les zones d'amorces de ruptures peuvent être prévues sur les moyens d'assemblage des composants (vis, rivets, etc...).

## Revendications

1. Dispositif d'essuyage pour véhicule automobile comportant au moins une platine (10) de guidage en rotation et de fixation d'un arbre d'entraînement en balayage alterné d'un essuie-glace, du type dans lequel la platine (10) comporte un fût (12) dans lequel l'arbre d'entraînement est monté à rotation, du type dans lequel la platine (10) est fixée sur la caisse du véhicule par une semelle (14) transversale et du type dans lequel la platine (10) est reliée au dispositif d'essuyage par un moignon transversal (18), caractérisé en ce que la platine (10) comporte au moins une zone d'amorce de rupture (22) à section résistante réduite, destinée à désolidariser le dispositif d'essuyage de la caisse du véhicule en cas de choc violent.

2. Dispositif d'essuyage selon la revendication 1, caractérisé en ce qu'une zone d'amorce de rupture (22) est agencée sur le moignon transversal (18) sous la forme d'une gorge radiale de manière à désolidariser le dispositif d'essuyage de la platine (10) en cas de choc.

3. Dispositif d'essuyage selon la revendication 1, caractérisé en ce qu'une zone d'amorce de rupture (22) est agencée sur la semelle (14) de manière à désolidariser le dispositif d'essuyage et la platine (10) de la caisse en cas de choc.

4. Dispositif d'essuyage selon la revendication 3, caractérisé en ce que la semelle (14) de la platine (10) comporte au moins un trou (16) pour le passage d'une vis de fixation, et en ce que la platine (10) présente autour du trou (16) une section réduite dans laquelle est aménagée au moins une entaille (22) pour former la zone d'amorce de rupture.

5. Dispositif d'essuyage selon l'une quelconque des revendications précédentes, caractérisé en ce que la platine (10) est réalisée en une seule pièce, notamment par moulage.

6. Platine de guidage en rotation et de fixation d'un arbre d'entraînement d'un essuie-glace de véhicule automobile, caractérisée en ce qu'elle est réalisée par des éléments conformément à l'une quelconque des revendications précédentes.

## Claims

1. Wiping device for a motor vehicle including at least one holder (10) for guiding in rotation and for fixing to a shaft for driving a wiper in alternating sweep, of the type in which the holder (10) has a barrel (12) in which the drive shaft is rotatably mounted, of the type in which the holder (10) is fixed to the body of the vehicle by a transverse sole plate (14) and of the type in which the holder (10) is connected to the wiping device by a transverse stub (18), characterised in that the holder (10) has at least one breaking area (22) with a reduced strong section, intended to disconnect the wiping device from the body of the vehicle in the event of a violent impact.

2. Wiping device according to Claim 1, characterised in that a breaking area (22) is arranged on the transverse stub (18) in the form of a radial groove so as to disconnect the wiping device from the holder (10) in the event of impact.

3. Wiping device according to Claim 1, characterised in that a breaking area (22) is arranged on the sole plate (14) so as to disconnect the wiping device and the holder (10) from the body in the event of impact.

4. Wiping device according to Claim 3, characterised in that the sole plate (14) of the holder (10) has at least one hole (16) for a fixing screw to pass, and in that the holder (10) has, around the hole (16), a reduced section in which there is formed at least one notch (22) for forming the breaking area.

5. Wiping device according to any one of the preceding claims, characterised in that the holder (10) is produced in a single piece, notably by casting.

6. Holder for guiding in rotation and fixing a drive shaft of a motor vehicle wiper, characterised in that it is produced by means of elements in accordance with any one of the preceding claims.

## Patentansprüche

1. Wischvorrichtung für ein Kraftfahrzeug mit mindestens einer Halterung (10) für die Drehführung und Befestigung einer Antriebswelle für die Pendelwischbewegung eines Scheibenwischers, wobei die Halterung (10) einen Schaft (12) umfaßt, in dem die Antriebswelle drehend gelagert ist, wobei die Halterung (10) an der Karosserie des Fahrzeugs durch eine quer angeordnete Lagerplatte (14) befestigt ist und wobei die Halterung (10) mit der Wischvorrichtung durch einen Querstumpf (18) verbunden ist , **dadurch gekennzeichnet**, daß die Halterung (10) mindestens eine Sollbruchstelle (22) mit einem verringerten Widerstandsquerschnitt umfaßt, die dazu bestimmt ist, die Wischvorrichtung im Falle eines heftigen Aufpralls von der Karosserie des Fahrzeugs zu trennen.

2. Wischvorrichtung nach Anspruch 1 , **dadurch gekennzeichnet**, daß eine Sollbruchstelle (22) am Querstumpf (18) in Form einer radialen Auskehlung angeordnet ist, um die Wischvorrichtung im Falle eines Aufpralls von der Halterung zu trennen.

3. Wischvorrichtung nach Anspruch 1 , **dadurch gekennzeichnet**, daß eine Sollbruchstelle (22) an der Lagerplatte (14) angeordnet ist, um die Wischvorrichtung und die Halterung (10) im Falle eines Aufpralls von der Karosserie zu trennen.

4. Wischvorrichtung nach Anspruch 3 , **dadurch gekennzeichnet**, daß die Lagerplatte (14) der Halterung (10) mindestens eine Bohrung (16) für den Durchgang einer Befestigungsschraube enthält und daß die Halterung (10) um diese Bohrung (16) herum einen verringerten Querschnitt aufweist, in den mindestens eine Einkerbung (22) eingearbeitet ist, um die Sollbruchstelle zu bilden.

5. Wischvorrichtung nach einem der vorangehenden Ansprüche, **dadurch gekennzeichnet**, daß die Halterung (10) einstückig, insbesondere als Formteil ausgeführt ist.

6. Halterung zur Drehführung und Befestigung einer Antriebswelle für einen Kraftfahrzeugscheibenwischer, **dadurch gekennzeichnet**, daß sie durch Elemente nach einem der vorangehenden Ansprüche ausgeführt ist.
